# EUROPEAN PATENT APPLICATION

(11) **EP 4 790 458 A1**
(43) Date of publication of application: **12.08.2026**
(21) Application number: 24874393.2
(22) Date of filing: 27.08.2024
(51) Int. Cl.: G01S 15/04, G01S 15/931

(54) **OBJECT DETECTION DEVICE**

(30) Priority: 02.10.2023 JP 2023171299
(71) Applicant: AISIN CORPORATION, Kariya-shi, Aichi 448-8650 (JP)
(72) Inventor: WAKITA, Kosuke, Kariya-shi, Aichi 448-8650 (JP); SUGAE, Ippei, Kariya-shi, Aichi 448-8650 (JP)
(74) Representative: TBK
(86) International application number: PCT/JP2024/030535
(87) International publication number: WO 2025/074779

(57) **Abstract**

An object detection device detects an obstacle present around a mobile object on the basis of a time-series change in intensity of a reflected wave generated by a transmission wave transmitted from the mobile object being reflected by an object. The object detection device includes a threshold calculation unit configured to calculate a varying threshold varying depending on movement of the mobile object on a basis of a moving average value of intensity of the reflected wave, and a determination unit configured to determine presence or absence of the obstacle on a basis of whether or not intensity of the reflected wave is larger than the varying threshold. The threshold calculation unit calculates a smoothed moving average value by smoothing a current moving average value on a basis of at least one past moving average value, and calculates the varying threshold on a basis of the smoothed moving average value.

## Description

### TECHNICAL FIELD

The present invention relates to an object detection device.

### BACKGROUND ART

In a mobile object such as a vehicle, an object detection device that detects an obstacle present around the mobile object on the basis of information such as a time of flight (TOF) or a Doppler shift obtained by transmitting and receiving ultrasonic waves or the like is used. In such an object detection device, constant false alarm rate (CFAR) processing is used as a technique for suppressing the influence of noise due to a reflected wave from an object (for example, a road surface) that is not a detection target. According to the CFAR processing, the threshold for determining whether or not the object that is the reflection source of the reflected wave is an obstacle is optimized depending on the state of the road surface or the like on the basis of the moving average value of the intensity of the reflected wave that changes in time series.

### CITATION LIST

### PATENT LITERATURE

Patent Literature 1: JP 2016-206011 A

### SUMMARY OF INVENTION

### TECHNICAL PROBLEMS

According to the CFAR processing described above, the influence of noise can be basically reduced and obstacle detection accuracy can be improved, but the detection accuracy may decrease depending on the situation. For example, in a case where an obstacle is present in a detection range, the moving average value of the intensity of a reflected wave increases, so that the threshold set by the CFAR processing increases, and the possibility of overlooking the obstacle increases.

The present invention has been made in view of the above, and provides an object detection device capable of suppressing overlooking of an obstacle and improving obstacle detection accuracy.

### SOLUTIONS TO PROBLEMS

An object detection device according to one aspect of the present invention is an object detection device that detects an obstacle present around a mobile object on a basis of a time-series change in intensity of a reflected wave generated by a transmission wave transmitted from the mobile object being reflected by an object, the object detection device includes a threshold calculation unit configured to calculate a varying threshold varying depending on movement of the mobile object on a basis of a moving average value of intensity of the reflected wave, and a determination unit configured to determine presence or absence of the obstacle on a basis of whether or not intensity of the reflected wave is larger than the varying threshold, in which the threshold calculation unit calculates a smoothed moving average value by smoothing a current moving average value on a basis of at least one past moving average value, and calculates the varying threshold on a basis of the smoothed moving average value.

### ADVANTAGEOUS EFFECTS OF INVENTION

According to the present invention, it is possible to provide the object detection device capable of suppressing the overlooking of the obstacle and improving the obstacle detection accuracy.

### BRIEF DESCRIPTION OF DRAWINGS

FIG. 1 is a diagram illustrating an example of a configuration of a vehicle according to a first embodiment.
FIG. 2 is a diagram illustrating an example of a configuration of a vehicle control system according to the first embodiment.
FIG. 3 is a diagram illustrating an example of a method of calculating a distance by a TOF method according to the first embodiment.
FIG. 4 is a diagram illustrating an example of a functional configuration of an object detection device according to the first embodiment.
FIG. 5 is a diagram illustrating an example of a functional configuration included in a threshold calculation unit according to the first embodiment.
FIG. 6 is a diagram illustrating an example of processing when calculating a CFAR threshold according to the first embodiment.
FIG. 7 is a diagram illustrating an example of a relationship between a current moving average value and a past moving average value according to the first embodiment.
FIG. 8 is a diagram illustrating an example of a CFAR threshold based on the current moving average value according to the first embodiment.
FIG. 9 is a diagram illustrating an example of a CFAR threshold based on a smoothed moving average value according to the first embodiment.
FIG. 10 is a flowchart illustrating an example of processing in the object detection device according to the first embodiment.
FIG. 11 is a diagram illustrating an example of a relationship between the CFAR threshold based on the current moving average value and a fixed threshold according to the first embodiment.
FIG. 12 is a flowchart illustrating an example of processing in an object detection device according to a second embodiment.

### DESCRIPTION OF EMBODIMENTS

Hereinafter, embodiments of the present invention will be described with reference to the drawings. The configurations of the embodiments described below and the functions and effects brought about by the configurations are merely examples, and the present invention is not limited to the following description.

### (First Embodiment)

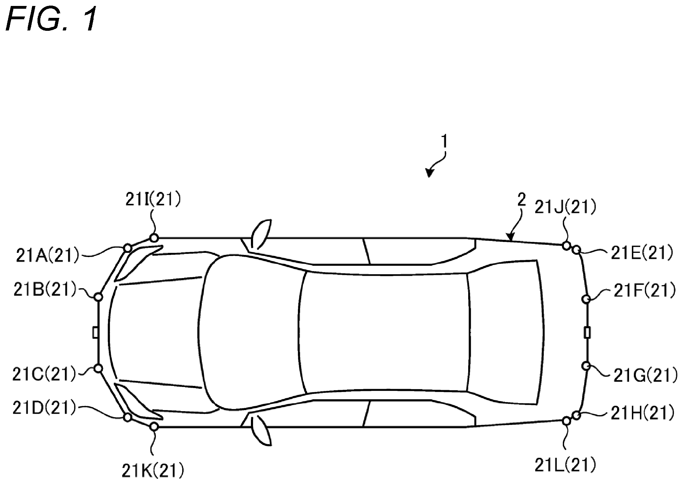

FIG. 1 is a diagram illustrating an example of a configuration of a vehicle 1 according to a first embodiment. The vehicle 1 is an example of a mobile object on which an object detection device according to the present embodiment is mounted. The object detection device according to the present embodiment is a device that detects an obstacle present around the vehicle 1 on the basis of information such as a time of flight (TOF) or a Doppler shift obtained by transmitting and receiving ultrasonic waves or the like.

The object detection device according to the present embodiment includes a plurality of transmission and reception units 21A to 21L. Hereinafter, the plurality of transmission and reception units 21A to 21L may be referred to as transmission and reception units 21 in a case where it is not necessary to distinguish the plurality of transmission and reception units 21A to 21L. Each of the transmission and reception units 21 is installed on a vehicle body 2 as an exterior of the vehicle 1, transmits an ultrasonic wave toward the outside of the vehicle body 2, and receives an ultrasonic wave generated by the ultrasonic wave being reflected by an object present outside the vehicle body 2. Hereinafter, the ultrasonic wave transmitted from the transmission and reception unit 21 may be referred to as a transmission wave, and the ultrasonic wave generated by the transmission wave being reflected by the object may be referred to as a reflected wave.

In the example illustrated in FIG. 1, four transmission and reception units 21A to 21D are arranged at the front end portion of the vehicle body 2, four transmission and reception units 21E to 21H are arranged at the rear end portion, two transmission and reception units 21I and 21J are arranged on the right side surface portion, and two transmission and reception units 21K and 21L are arranged on the left side surface portion. Note that the number and installation positions of the transmission and reception units 21 are not limited to this example.

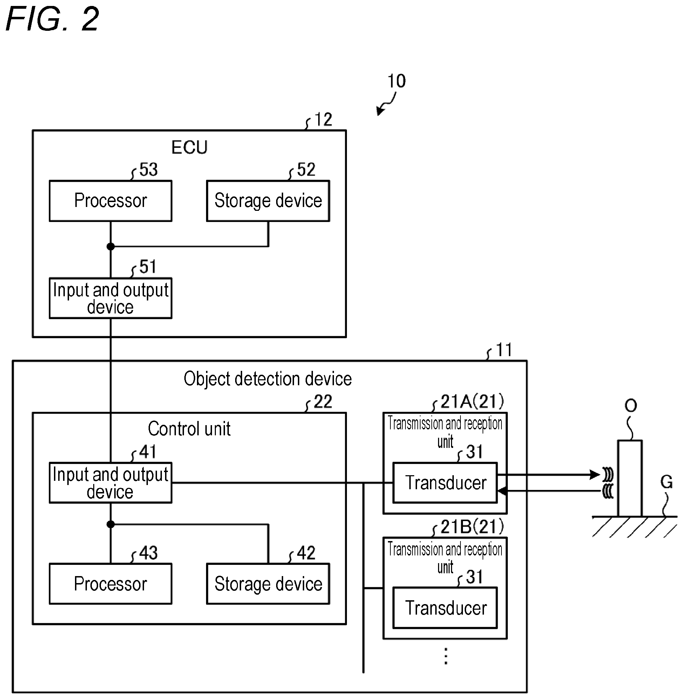

FIG. 2 is a diagram illustrating an example of a configuration of a vehicle control system 10 according to the first embodiment. The vehicle control system 10 performs processing for controlling the vehicle 1 on the basis of information output from an object detection device 11. The vehicle control system 10 according to the present embodiment includes the object detection device 11 and an ECU 12.

The object detection device 11 includes the plurality of transmission and reception units 21 and a control unit 22. Each transmission and reception unit 21 includes a transducer 31 configured using a piezoelectric element or the like, an amplifier, and the like, and achieves transmission and reception of an ultrasonic wave by vibration of the transducer 31. Specifically, each transmission and reception unit 21 transmits an ultrasonic wave generated in response to the vibration of the transducer 31 as a transmission wave, and detects the vibration of the transducer 31 caused by a reflected wave of the transmission wave reflected by an object such as an obstacle O or a road surface G. The obstacle O is an object to be detected among objects present around the vehicle 1, and may be, for example, another vehicle, a road accessory, a wall surface, a person, a curbstone, a car stop, or the like. The vibration of the transducer 31 is converted into an electric signal, and a TOF corresponding to a distance from the transmission and reception unit 21 to the obstacle O, a Doppler shift corresponding to the relative speed between the vehicle 1 and the obstacle O, and the like can be acquired on the basis of the electric signal.

Note that, in the example illustrated in FIG. 2, a configuration in which both transmission of the transmission wave and reception of the reflected wave are performed using the single transducer 31 is exemplified, but the configuration of the transmission and reception unit 21 is not limited thereto. For example, like a configuration in which a transducer for transmitting the transmission wave and a transducer for receiving the reflected wave are separately provided, the transmission side and the reception side may be separated.

The control unit 22 includes an input and output device 41, a storage device 42, and a processor 43. The input and output device 41 is an interface device that enables transmission and reception of information between the control unit 22 and an external device (the transmission and reception unit 21, the ECU 12, or the like). The storage device 42 includes a main storage device such as a read only memory (ROM) and a random access memory (RAM), and an auxiliary storage device such as a hard disk drive (HDD) and a solid state drive (SSD). The processor 43 is an integrated circuit that executes various processing for implementing the functions of the control unit 22, and can be configured using, for example, a central processing unit (CPU), an application specific integrated circuit (ASIC), a field programmable gate array (FPGA), or the like that operates in accordance with a program. The processor 43 executes various arithmetic operations and control processing by reading and executing a program stored in the storage device 42.

The ECU 12 is a unit that executes various processing for controlling the vehicle 1 on the basis of information acquired from the object detection device 11 and the like. The ECU 12 includes an input and output device 51, a storage device 52, and a processor 53. The input and output device 51 is an interface device that enables transmission and reception of information between the ECU 12 and an external mechanism (the object detection device 11, a drive mechanism, a braking mechanism, a steering mechanism, a transmission mechanism, an in-vehicle display, speaker, various sensors, and the like). The storage device 52 includes a main storage device such as a ROM and a RAM, and an auxiliary storage device such as an HDD and an SSD. The processor 53 is an integrated circuit that executes various processing for implementing the functions of the ECU 12, and can be configured using, for example, a CPU, an ASIC, an FPGA, or the like. The processor 53 executes various arithmetic operations and control processing by reading and executing a program stored in the storage device 52.

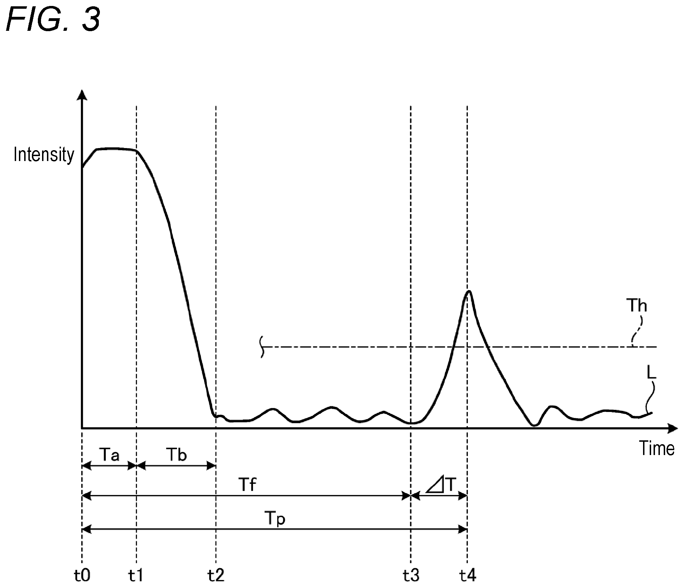

FIG. 3 is a diagram illustrating an example of a method of calculating a distance by a TOF method according to the first embodiment. FIG. 3 illustrates an envelope L indicating a temporal change in the intensity (the signal level) of an ultrasonic wave transmitted and received by the transmission and reception unit 21. In the graph illustrated in FIG. 3, the horizontal axis corresponds to time (TOF), and the vertical axis corresponds to the intensity of the ultrasonic wave transmitted and received by the transmission and reception unit 21 (the magnitude of vibration of the transducer 31).

The envelope L indicates a temporal change in intensity indicating the magnitude of vibration of the transducer 31. It can be understood from the envelope L illustrated in FIG. 3 that the transducer 31 is driven to vibrate for a time Ta starting at a timing t0, so that the transmission of a transmission wave is completed at a timing t1, and the vibration of the transducer 31 due to inertia then continues while being attenuated for a time Tb until a timing t2. Therefore, in the graph illustrated in FIG. 3, the time Tb corresponds to a so-called reverberation time.

The envelope L reaches a peak at which the magnitude of the vibration of the transducer 31 is equal to or larger than a threshold Th at a timing t4 after the elapse of a time Tp from the timing t0 at which the transmission of the transmission wave is started. The threshold Th is a value set to identify whether the vibration of the transducer 31 is caused by reception of a reflected wave from the obstacle O or by reception of a reflected wave from an object other than the obstacle O (for example, the road surface G or the like). Note that the threshold Th is shown as a constant value here, but the threshold Th may be a varying value that changes depending on the situation. Vibration having a peak equal to or larger than the threshold Th can be regarded as being caused by the reception of the reflected wave from the obstacle O.

The envelope L in this example indicates that the vibration of the transducer 31 is attenuated after the timing t4. Therefore, the timing t4 corresponds to a timing at which the reception of the reflected wave from the obstacle O is completed, in other words, a timing at which the transmission wave transmitted last at the timing t1 returns as the reflected wave.

Furthermore, in the envelope L, a timing t3 as the start point of the peak at the timing t4 corresponds to a timing at which the reception of the reflected wave from the obstacle O starts, in other words, a timing at which the transmission wave transmitted first at the timing t0 returns as the reflected wave. Therefore, the time ΔT between the timing t3 and the timing t4 is equal to the time Ta as the transmission time of the transmission wave.

From the above, in order to obtain the distance from the transmission and reception unit 21, which is the transmission and reception source of the ultrasonic wave, to the obstacle O using the TOF, it is necessary to obtain a time Tf between the timing t0 at which the transmission wave starts to be transmitted and the timing t3 at which the reflected wave starts to be received. The time Tf can be obtained by subtracting the time ΔT equal to the time Ta as the transmission time of the transmission wave from the time Tp as the difference between the timing t0 and the timing t4 at which the intensity of the reflected wave exceeds the threshold Th and reaches the peak.

The timing t0 at which the transmission wave starts to be transmitted can be easily specified as a timing at which the object detection device 200 starts to operate, and the time Ta as the transmission time of the transmission wave is determined in advance by setting or the like. Therefore, by specifying the timing t4 at which the intensity of the reflected wave reaches the peak equal to or larger than the threshold Th, the distance from the vehicle 1 (the transmission and reception unit 21 that is the transmission and reception source of the ultrasonic wave) to the obstacle O can be obtained. Note that the above calculation method is an example, and the distance from the vehicle 1 to the obstacle O only needs to be calculated appropriately using a known or new method.

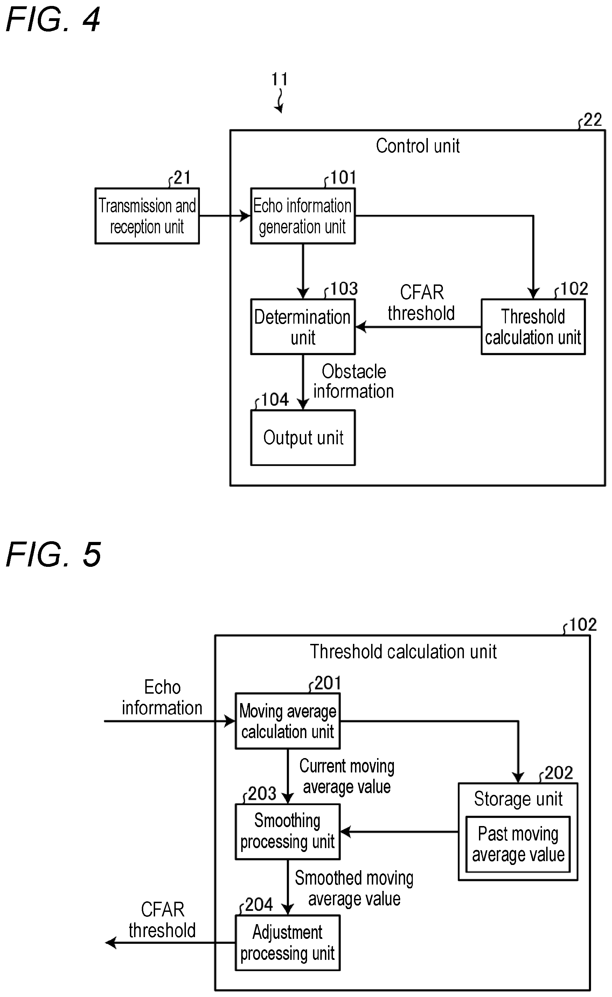

FIG. 4 is a diagram illustrating an example of a functional configuration of the object detection device 11 according to the first embodiment. The object detection device 11 (the control unit 22) according to the present embodiment includes an echo information generation unit 101, a threshold calculation unit 102, a determination unit 103, and an output unit 104. These functional units can be implemented by, for example, cooperation of hardware and software (a program or the like) of the object detection device 11 illustrated in FIG. 2. In addition, at least a part of these functional units may be implemented by dedicated hardware (a circuit).

The echo information generation unit 101 generates echo information indicating a time-series change in the intensity of the reflected wave on the basis of the information acquired from the transmission and reception unit 21. The echo information may include, for example, the data of the envelope L illustrated in FIG. 3.

The threshold calculation unit 102 calculates a CFAR threshold (an example of a varying threshold) that varies depending on the movement of the vehicle 1 by CFAR processing on the echo information. The threshold calculation unit 102 calculates a moving average value of the intensity of the reflected wave on the basis of the echo information, and calculates the CFAR threshold on the basis of the moving average value. The method of calculating the CFAR threshold will be described later.

The determination unit 103 determines whether or not an obstacle is present around the vehicle 1 on the basis of the echo information and the CFAR threshold calculated by the threshold calculation unit 102. The determination unit 103 of the present embodiment determines that an obstacle is present in a case where the intensity of the reflected wave is larger than the CFAR threshold. When determining that an obstacle is present, the determination unit 103 generates obstacle information related to the obstacle. The obstacle information may include, for example, a distance from the vehicle 1 (the transmission and reception unit 21) to the obstacle, a relative speed of the obstacle, and the like.

The output unit 104 outputs the obstacle information generated by the determination unit 103 to a predetermined mechanism (for example, the ECU 12 or the like).

The threshold calculation unit 102 of the present embodiment calculates a smoothed moving average value by smoothing the current moving average value on the basis of at least one past moving average value, and calculates the CFAR threshold on the basis of the smoothed moving average value.

FIG. 5 is a diagram illustrating an example of a functional configuration included in the threshold calculation unit 102 according to the first embodiment. The threshold calculation unit 102 according to the present embodiment includes a moving average calculation unit 201, a storage unit 202, a smoothing processing unit 203, and an adjustment processing unit 204.

The moving average calculation unit 201 calculates a moving average value of the intensity of the reflected wave on the basis of echo information indicating a time-series change in the intensity of the reflected wave. The moving average calculation unit 201 calculates the moving average value for each predetermined detection cycle, for example. The detection cycle is a period of waiting for reception of a reflected wave of a transmission wave after transmitting the transmission wave once.

The storage unit 202 stores the moving average value calculated by the moving average calculation unit 201 for each detection cycle. That is, the storage unit 202 stores a plurality of past moving average values in time series.

The smoothing processing unit 203 executes smoothing processing of smoothing the current moving average value calculated by the moving average calculation unit 201 on the basis of at least one past moving average value stored in the storage unit 202. The specific method of the smoothing processing should be appropriately determined depending on usage conditions or the like, and may be, for example, processing of calculating the average value of the current moving average value and at least one past moving average value as the smoothed moving average value.

The adjustment processing unit 204 calculates the CFAR threshold by performing predetermined adjustment processing on the smoothed moving average value calculated by the smoothing processing unit 203. The adjustment processing may be, for example, a multiplication operation, an addition operation, or the like. The multiplication operation is an operation of multiplying a predetermined constant by the moving average value (the smoothed moving average value in the present embodiment). The addition operation is an operation of adding a predetermined constant to the moving average value.

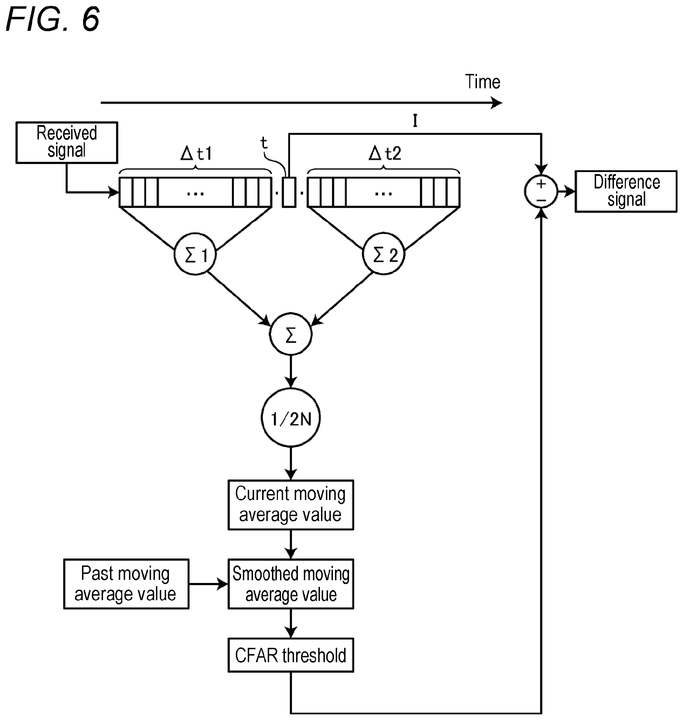

FIG. 6 is a diagram illustrating an example of processing when calculating the CFAR threshold according to the first embodiment. In the processing exemplified here, first, a received signal indicating the intensity of the reflected wave is sampled at predetermined time intervals. Thereafter, a first sum Σ1, which is the sum of the intensity values of N samples of the reflected wave received in a first period Δt1 before a certain detection timing t, is calculated. In addition, a second sum Σ2, which is the sum of the intensity values of N samples of the reflected wave received in a second period Δt2 after the detection timing t, is calculated. Thereafter, the current moving average value (the moving average value corresponding to the detection timing t) is calculated by dividing the sum Σ obtained by adding the first sum Σ1 and the second sum Σ2 by 2N, which is the sum of the number of samples N in the first period Δt1 and the number of samples N in the second period Δt2.

Thereafter, the smoothed moving average value obtained by smoothing the current moving average value is calculated on the basis of the current moving average value and at least one past moving average value (a moving average value corresponding to a detection timing before the detection timing t). The smoothed moving average value may be, for example, an average value of the current moving average value and the past moving average value or the like. The CFAR threshold is then calculated by performing a predetermined multiplication operation, a predetermined addition operation, or the like on the smoothed moving average value. Whether or not an obstacle is present at the distance corresponding to the detection timing t is then determined on the basis of a difference signal indicating the difference between the CFAR threshold and the intensity value I of the reflected wave corresponding to the detection timing t.

Note that the method of calculating the current moving average value is not limited to the above. For example, in the above description, the CA (Cell Averaging)-CFAR processing in which the average value of all the intensity values corresponding to the periods Δt1 and Δt2 before and after the detection timing t is set as the moving average value has been described, but a CFAR threshold Thc may be calculated by GO (Greatest Of)-CFAR processing, SO (Smallest Of)-CFAR processing, or the like. The GO-CFAR processing is processing of calculating the moving average value using the larger value of the first sum Σ1 and the second sum Σ2. The SO-CFAR processing is processing of calculating the moving average value using the smaller value of the first sum Σ1 and the second sum Σ2.

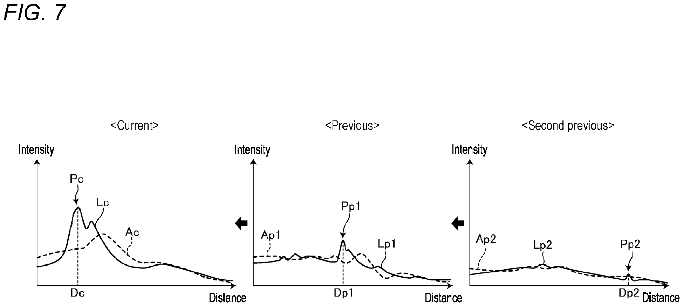

FIG. 7 is a diagram illustrating an example of a relationship between a current moving average value Ac and past moving average values Ap1 and Ap2 according to the first embodiment. In FIG. 7, the current moving average value Ac, the previous moving average value Ap1 (an example of the past moving average value), and the second previous moving average value Ap2 (an example of the past moving average value) are illustrated.

The current moving average value Ac is a moving average value (a moving average line) of an envelope Lc corresponding to the current detection cycle. The previous moving average value Ap1 is a moving average value of an envelope Lp1 corresponding to a detection cycle before the current detection cycle (for example, one time before or the like). The second previous moving average value Ap2 is a moving average value of an envelope Lp2 corresponding to a detection cycle before the detection cycle corresponding to the previous moving average value Ap1 (for example, two times before the current detection cycle or the like). Note that two moving average values are used as past moving average values in this example, three or more past moving average values may be used.

In FIG. 7, a peak Pc in the current envelope Lc, a peak Pp1 in the previous envelope Lp1, and a peak Pp2 in the second previous envelope Lp2 are caused by the same obstacle. That is, it is illustrated that the obstacle is at a position separated by a distance Dp2 in the second previous detection cycle, at a position separated by a distance Dp1 in the previous detection cycle, and at a position separated by a distance Dc in the current detection cycle (Dc < Dp1 < Dp2).

In such a case, as illustrated in FIG. 7, the height (the intensity) of each of the peaks Pc, Pp1, and Pp2 caused by the obstacle increases as the distance from the vehicle 1 to the obstacle decreases. Therefore, the influence of the reflected wave from the obstacle on the current moving average value Ac is larger than the influence on the past moving average values Ap1 and Ap2. For this reason, the current moving average value Ac in a case where an obstacle is present tends to be larger than the past moving average values Ap1 and Ap2 due to the influence of the reflected wave from the obstacle.

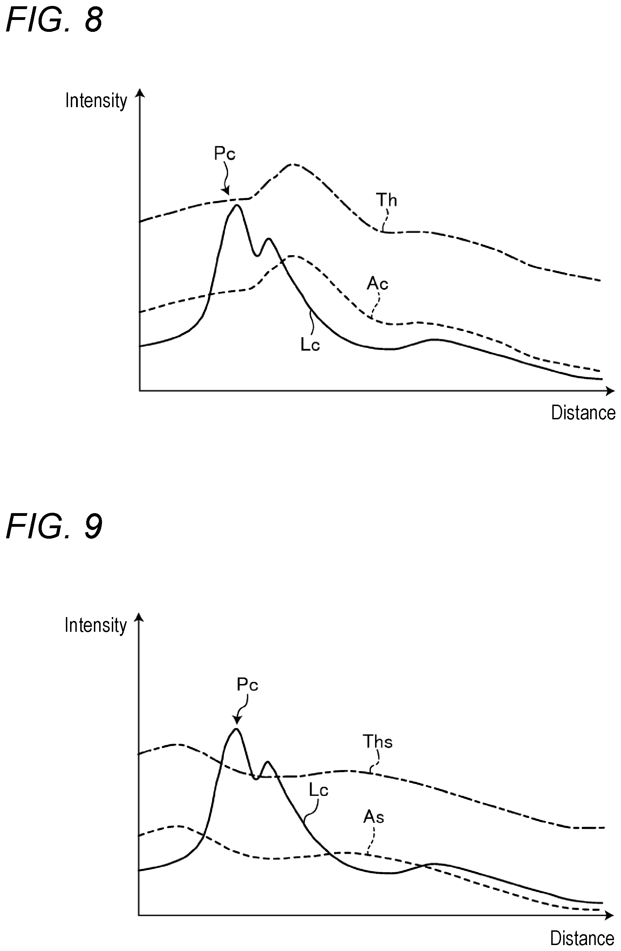

FIG. 8 is a diagram illustrating an example of a CFAR threshold Th based on the current moving average value Ac according to the first embodiment. As illustrated in FIG. 8, the CFAR threshold Th based on the current moving average value Ac that is not subjected to the smoothing processing is set to be high due to the influence of the reflected wave from an obstacle. In such a case, since the peak Pc appearing on the envelope Lc due to the obstacle is less likely to exceed the CFAR threshold Th, there is a high possibility that the obstacle is not detected.

Therefore, in the present embodiment, the smoothed moving average value is calculated by smoothing the current moving average value Ac on the basis of the past moving average values Ap1 and Ap2, and the CFAR threshold is calculated on the basis of the smoothed moving average value.

FIG. 9 is a diagram illustrating an example of a CFAR threshold Ths based on a smoothed moving average value As according to the first embodiment. The smoothed moving average value As illustrated here is an average value of the current moving average value Ac, the previous moving average value Ap1, and the second previous moving average value Ap2 illustrated in FIG. 7.

As illustrated in FIG. 9, the influence of the peak Pc appearing on the envelope Lc due to an obstacle is reduced, and the smoothed moving average value As is smoothed more than the current moving average value Ac (see FIG. 8). As a result, it is possible to prevent the CFAR threshold Ths calculated on the basis of the smoothed moving average value As from being set excessively high, and it is possible to reduce the possibility of overlooking the obstacle.

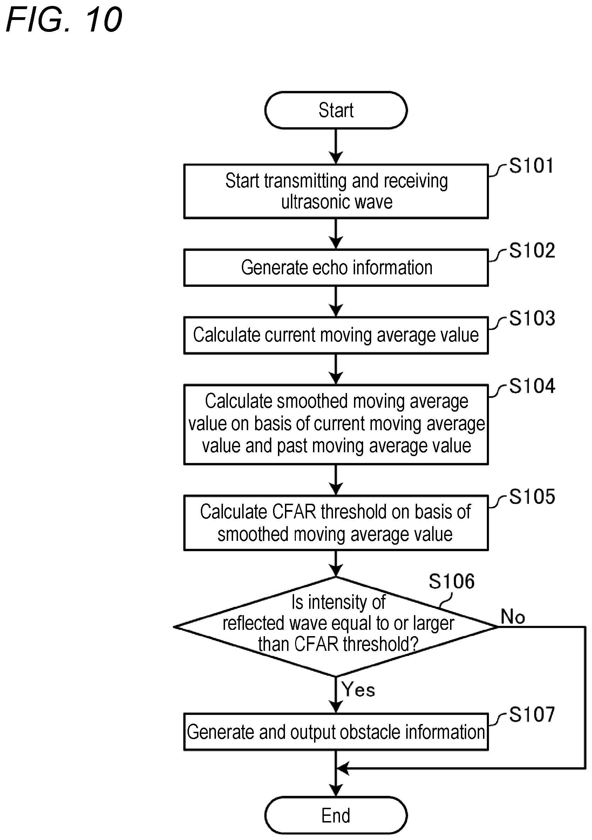

FIG. 10 is a diagram illustrating an example of processing in the object detection device 11 according to the first embodiment. When the transmission and reception unit 21 starts transmitting and receiving an ultrasonic wave in step S101, the echo information generation unit 101 generates echo information indicating a time-series change in the intensity of a reflected wave from an object present around the vehicle 1 in step S102.

In step S103, the threshold calculation unit 102 calculates the current moving average value Ac on the basis of the echo information. In step S104, the threshold calculation unit 102 calculates the smoothed moving average value As on the basis of the current moving average value Ac and the past moving average values Ap1 and Ap2. In step S105, the threshold calculation unit 102 calculates the CFAR threshold Ths on the basis of the smoothed moving average value As.

In step S106, the determination unit 103 determines whether or not the current intensity of the reflected wave is equal to or larger than the CFAR threshold Ths. In step S106, in a case where the intensity of the reflected wave is not equal to or larger than the CFAR threshold Ths (S106: No), the determination unit 103 determines that no obstacle is present, and this routine ends. In a case where the intensity of the reflected wave is equal to or larger than the CFAR threshold Ths in step S106 (S106: Yes), the determination unit 103 determines that an obstacle is present and generates obstacle information related to the obstacle, and in step S107, the output unit 104 outputs the obstacle information to a mechanism such as the ECU 12.

As described above, according to the present embodiment, since the CFAR threshold Ths is set on the basis of the smoothed moving average value As smoothed using the past moving average values Ap1 and Ap2, it is possible to prevent the CFAR threshold from being set excessively high due to the influence of the reflected wave from an obstacle or the like. As a result, it is possible to suppress the overlooking of the obstacle and improve the obstacle detection accuracy.

Hereinafter, other embodiments will be described with reference to the drawings, but the description of the same or similar parts as those of the first embodiment will be appropriately omitted.

### (Second Embodiment)

An object detection device 11 according to a second embodiment is different from that of the first embodiment in that in a case where a CFAR threshold Th based on a current moving average value Ac is larger than a predetermined fixed threshold, a smoothed moving average value Ths is calculated on the basis of at least one past moving average value Ap1 or Ap2 without using the current moving average value Ac.

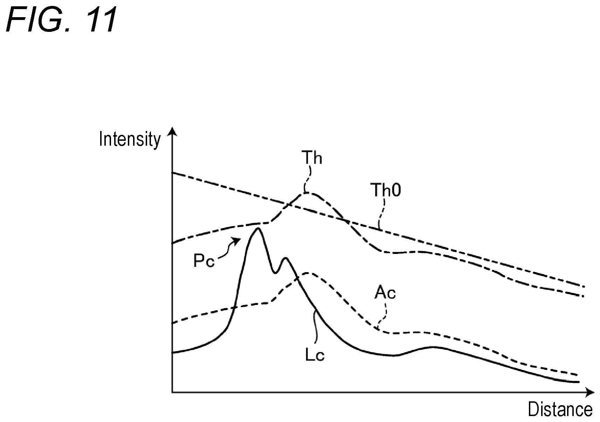

FIG. 11 is a diagram illustrating an example of a relationship between the CFAR threshold Th based on the current moving average value Ac and a fixed threshold Th0 according to the first embodiment. The fixed threshold Th0 illustrated here is a fixed value uniquely determined with respect to the distance from the vehicle 1. The fixed threshold Th0 may be stored in advance in an appropriate storage device (for example, the storage device 42 or the like) mounted on the vehicle 1. The specific method of setting the fixed threshold Th0 should be appropriately determined in accordance with the specification of the vehicle 1, the performance of the transmission and reception unit 21, and the like, but the fixed threshold Th0 can be set on the basis of, for example, a statistical value (for example, a lower limit value, an average value, or the like) of the intensity of a reflected wave from an obstacle for each distance. Since the intensity of the reflected wave from the obstacle decreases as the distance from the vehicle 1 increases, the fixed threshold Th0 is normally set to decrease as the distance from the vehicle 1 increases. Note that, here, the fixed threshold Th0 that decreases linearly with an increase in distance is illustrated, but the form of the fixed threshold Th0 is not limited thereto.

FIG. 11 illustrates a state where a part of the CFAR threshold Th based on the current moving average value Ac is larger than the fixed threshold Th0. In such a case, in the present embodiment, the smoothed moving average value Ths (see FIG. 9) is calculated on the basis of at least one past moving average value without using the current moving average value Ac. The specific method of calculating the smoothed moving average value Ths in this case may be appropriately determined depending on usage conditions or the like. For example, the average value of a plurality of past moving average values (for example, the past moving average values Ap1 and Ap2 illustrated in FIG. 7 or the like) may be set as the smoothed moving average value Ths, or one past moving average value selected from a plurality of past moving average values may be set as the smoothed moving average value Ths.

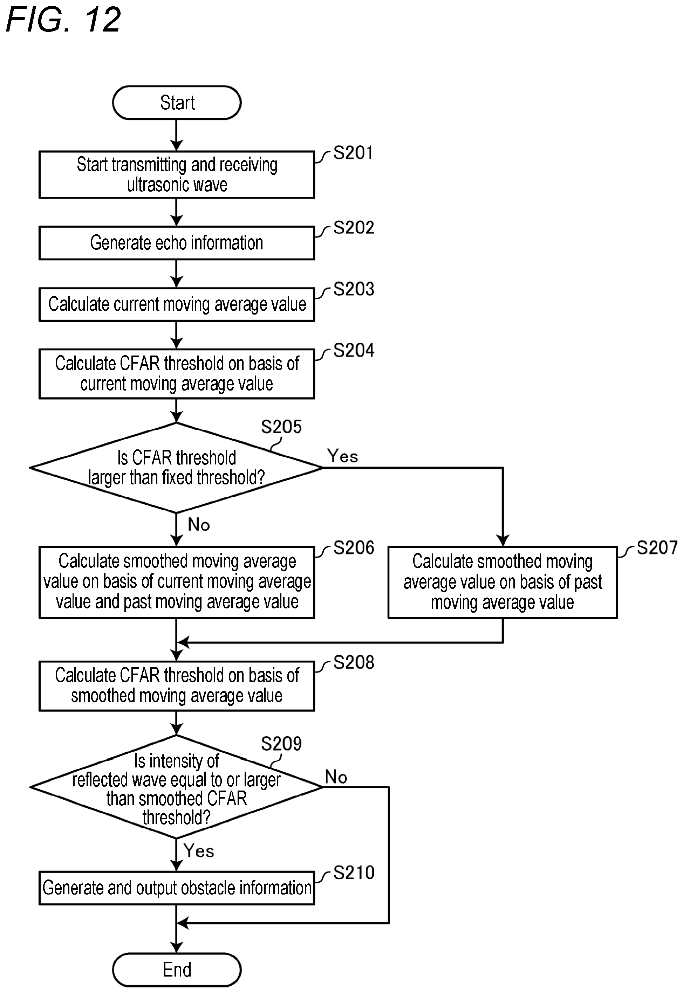

FIG. 12 is a flowchart illustrating an example of processing in the object detection device 11 according to the second embodiment. When the transmission and reception unit 21 starts transmitting and receiving an ultrasonic wave in step S201, the echo information generation unit 101 generates echo information indicating a time-series change in the intensity of a reflected wave from an object present around the vehicle 1 in step S202.

In step S203, the threshold calculation unit 102 calculates the current moving average value Ac on the basis of the echo information. In step S204, the threshold calculation unit 102 calculates the CFAR threshold Th on the basis of the current moving average value Ac. In step S205, the threshold calculation unit 102 determines whether or not the CFAR threshold Th based on the current moving average value Ac is larger than the fixed threshold Th0.

In step S205, in a case where the CFAR threshold Th based on the current moving average value Ac is not larger than the fixed threshold Th0 (S205: No), in step S206, the threshold calculation unit 102 calculates the smoothed moving average value As on the basis of the current moving average value Ac and the past moving average values Ap1 and Ap2.

In step S205, in a case where the CFAR threshold Th based on the current moving average value Ac is larger than the fixed threshold Th0 (S205: Yes), in step S207, the threshold calculation unit 102 calculates the smoothed moving average value As on the basis of the past moving average values Ap1 and Ap2 without using the current moving average value Ac. The method of calculating the smoothed moving average value As on the basis of the past moving average values Ap1 and Ap2 may be appropriately determined depending on usage conditions or the like. For example, the average value of a plurality of the past moving average values Ap1 and Ap2 may be set as the smoothed moving average value As, or one past moving average value selected from a plurality of past moving average values (for example, one of the past moving average values Ap1 and Ap2) may be set as the smoothed moving average value As.

In step S208, the threshold calculation unit 102 calculates the CFAR threshold Ths smoothed on the basis of the smoothed moving average value As calculated in step S206 or step S207. In step S209, the determination unit 103 determines whether or not the current intensity of the reflected wave is equal to or larger than the smoothed CFAR threshold Ths. In step S209, in a case where the intensity of the reflected wave is not equal to or larger than the smoothed CFAR threshold Ths (S209: No), the determination unit 103 determines that no obstacle is present, and this routine ends. In a case where the intensity of the reflected wave is equal to or larger than the smoothed CFAR threshold Ths in step S209 (S209: Yes), the determination unit 103 determines that an obstacle is present and generates obstacle information related to the obstacle, and the output unit 104 outputs the obstacle information to a mechanism such as the ECU 12 in step S210.

As described above, according to the present embodiment, in a case where the CFAR threshold Th based on the current moving average value Ac is larger than the predetermined fixed threshold Th0, the smoothed moving average value As is calculated on the basis of at least one past moving average value Ap1 or Ap2 without using the current moving average value Ac. The presence or absence of an obstacle is then determined on the basis of the CFAR threshold Ths calculated on the basis of the smoothed moving average value As. As a result, the current moving average value Ac strongly affected by the reflected wave from an obstacle can be excluded from the elements for calculating the smoothed moving average value As, and the CFAR threshold Ths can be set more appropriately.

### (Modifications)

In the embodiments described above, the configuration in which the ultrasonic wave is used as a wave transmitted and received for detecting an obstacle has been exemplified, but the configuration of the object detection device is not limited thereto. For example, a millimeter-wave radar, a light detection and ranging (LiDAR) sensor, or the like may be used.

In addition, the threshold calculation unit 102 (the smoothing processing unit 203) may limit the past moving average value used to calculate the smoothed moving average value to the past moving average value corresponding to the detection cycle in which it is determined that no obstacle is present. According to this configuration, it is possible to more effectively prevent the CFAR threshold from being set excessively high due to the influence of the reflected wave from an obstacle.

Furthermore, the threshold calculation unit 102 (the smoothing processing unit 203) may change the number of past moving average values used to calculate the smoothed moving average value depending on the distance of an obstacle determined to be present by the determination unit 103. The relationship between the distance of the obstacle and the number of past moving average values should be appropriately determined depending on usage conditions or the like, but for example, the number of past moving average values used to calculate the smoothed moving average value may be increased as the distance from the vehicle 1 to the obstacle decreases. This is because the influence of the reflected wave from the obstacle increases as the distance from the vehicle 1 to the obstacle decreases. According to this configuration, the CFAR threshold can be set more appropriately depending on the distance from the vehicle 1 to the obstacle.

The program that causes a computer (for example, the processor 43 or the like) to execute processing of implementing the function of the object detection device described above can be provided by being recorded in a computer-readable recording medium such as a CD (compact disc)-ROM, a flexible disk (FD), a CD-R (recordable), and a digital versatile disk (DVD) as a file in an installable format or an executable format. Furthermore, the program may be provided or distributed via a network such as the Internet.

Although the embodiments of the present invention have been described above, the embodiments and modifications described above are merely examples, and are not intended to limit the scope of the invention. These novel embodiments and modifications described above can be implemented in various other forms, and various omissions, substitutions, and changes can be made without departing from the gist of the invention. These embodiments and modifications described above are included in the scope and gist of the invention, and are included in the invention described in the claims and the equivalent scope thereof.

### REFERENCE SIGNS LIST

1: Vehicle (mobile object), 11: Object detection device, 21, 21A to 21L: Transmission and reception unit, 102: Threshold calculation unit, 103: Determination unit, Ac: Current moving average value, Ap1, Ap2: Past moving average value, As: Smoothed moving average value, Th: (Before smoothing) CFAR threshold (varying threshold), Ths: (After smoothing) CFAR threshold (varying threshold), and Th0: Fixed threshold

## Claims

1. An object detection device that detects an obstacle present around a mobile object on a basis of a time-series change in intensity of a reflected wave generated by a transmission wave transmitted from the mobile object being reflected by an object, the object detection device comprising:
a threshold calculation unit configured to calculate a varying threshold varying depending on movement of the mobile object on a basis of a moving average value of intensity of the reflected wave; and
a determination unit configured to determine presence or absence of the obstacle on a basis of whether or not intensity of the reflected wave is larger than the varying threshold, wherein
the threshold calculation unit calculates a smoothed moving average value by smoothing a current moving average value on a basis of at least one past moving average value, and calculates the varying threshold on a basis of the smoothed moving average value.

2. The object detection device according to claim 1, wherein in a case where the varying threshold based on the current moving average value is larger than a predetermined fixed threshold, the threshold calculation unit calculates the smoothed moving average value on a basis of at least one past moving average value without using the current moving average value.

3. The object detection device according to claim 1 or 2, wherein the threshold calculation unit limits the past moving average value used to calculate the smoothed moving average value to the past moving average value corresponding to a detection cycle in which it is determined that the obstacle is not present.

4. The object detection device according to claim 1 or 2, wherein the threshold calculation unit changes a number of the past moving average values used to calculate the smoothed moving average value depending on a distance of the obstacle determined to be present by the determination unit.

5. The object detection device according to claim 1 or 2, wherein
the threshold calculation unit calculates a moving average value of intensity of the reflected wave for each predetermined detection cycle, and stores the moving average value calculated in time series, and
the detection cycle is a period of waiting for reception of the reflected wave of the transmission wave after transmitting the transmission wave once.

6. The object detection device according to claim 1 or 2, wherein the threshold calculation unit calculates an average value of the current moving average value and at least one past moving average value as the smoothed moving average value.

7. The object detection device according to claim 4, wherein the threshold calculation unit increases a number of the past moving average values used to calculate the smoothed moving average value as a distance from the mobile object to the obstacle decreases.
